# EUROPEAN PATENT APPLICATION

(11) **EP 4 742 322 A1**
(43) Date of publication of application: **13.05.2026**
(21) Application number: 24849664.8
(22) Date of filing: 02.08.2024
(51) Int. Cl.: H01M 4/38, H01M 4/36, H01M 4/62, H01M 4/587, H01M 4/13, H01M 10/052, H01M 4/02

(54) **ANODE, MANUFACTURING METHOD THEREFOR, AND ELECTROCHEMICAL DEVICE COMPRISING SAME**

(30) Priority: 03.08.2023 KR 20230101869
(71) Applicant: LG Energy Solution, Ltd., Seoul 07335 (KR)
(72) Inventor: SHIN, Min-Seon, Daejeon 34122 (KR); SUNG, Nak-Gi, Daejeon 34122 (KR)
(74) Representative: Goddar, Heinz J.
(86) International application number: PCT/KR2024/011448
(87) International publication number: WO 2025/029097

(57) **Abstract**

Disclosed are a negative electrode including a current collector; and a negative electrode active material layer located on at least one surface of the current collector and including granulated particles and a second binder, wherein the second binder holds and connects the granulated particles together, wherein the granulated particles include a negative electrode active material, a conductive material and a first binder, wherein the first binder connects and holds the negative electrode active material and the conductive material together, a method for manufacturing the same, and an electrochemical device including the same.

## Description

### TECHNICAL FIELD

The present disclosure relates to a negative electrode, a method for manufacturing the same and an electrochemical device including the same.

The present application claims priority to Korean Patent Application No. 10-2023-0101869 filed on August 3, 2023 in the Republic of Korea, the disclosure of which is incorporated herein by reference.

### BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. The most common secondary batteries are lithium secondary batteries, and lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and they have a diverse range of applications including use as an auxiliary power source via a grid.

A lithium secondary battery has a structure in which an electrode assembly including a positive electrode and a negative electrode, each having an active material coating on an electrode current collector with a porous separator interposed between the positive electrode and the negative electrode is impregnated with an electrolyte including a lithium salt, and the electrode is manufactured by coating a slurry in which an active material, a binder and a conductive material are dispersed in a solvent on the current collector, drying and roll pressing.

Additionally, the basic performance characteristics of the lithium secondary battery, capacity, output and life are greatly affected by the negative electrode material. To maximize the performance of the battery, the negative electrode active material needs to fulfill the requirements that the electrochemical reaction potential is close to lithium metal, reaction reversibility with lithium ions is high and the diffusion rate of lithium ions in the active material is high.

Carbon-based materials that have been primarily used to manufacture negative electrodes of lithium secondary batteries have the theoretical capacity limit of 372 mAh/g, which is a factor that hinders the increase of energy density. Silicon-based materials are an emerging solution to the problem. Silicon has theoretical capacity of 4010 mAh/g level, and the theoretical capacity of silicon is 10 times or more higher than that of carbon-based materials. However, charging/discharging efficiency of carbon-based materials is at 92% level while charging/discharging efficiency of silicon-based materials is at 80% level, and a change in volume is 300% or more during charging/discharging. When conduction paths are cut off in a continuous charging/discharging process, silicon-based materials do not work as the active material.

To solve the problems with lower conductivity of silicon-based materials than carbon-based materials and poor electrical contact between particles due to large electrode swelling when silicon-based materials are used, linear shaped conductive materials such as carbon nanotubes (CNT) are additionally used, but it is still challenging to solve the electrode degradation problem due to non-uniform dispersion of silicon-based materials and linear shaped conductive materials.

### DISCLOSURE

### Technical Problem

The present disclosure is directed to providing a negative electrode with improved conductivity through improved electrical contact, a method for manufacturing the negative electrode, and an electrochemical device including the negative electrode.

### Technical Solution

To solve the above-described problems, according to an aspect of the present disclosure, there is provided a negative electrode of the following embodiment.

According to a first embodiment,
there is provided the negative electrode including a current collector; and
a negative electrode active material layer located on at least one surface of the current collector and including granulated particles and a second binder, wherein the second binder holds and connects the granulated particles together,
wherein the granulated particles include a negative electrode active material, a conductive material and a first binder, wherein the first binder connects and holds the negative electrode active material and the conductive material together.

According to a second embodiment, in the first embodiment,
the negative electrode active material may include a silicon-based active material alone, or a mixture of the silicon-based active material with a carbon-based active material.

According to a third embodiment, in the second embodiment,
the silicon-based active material may include silicon (Si), a silicon oxide (SiOx (0<x≤2), a silicon carbide (SiC), or two or more of them.

According to a fourth embodiment, in the second or third embodiment,
the carbon-based active material may include natural graphite, artificial graphite, graphene, or two or more of them.

According to a fifth embodiment, in any one of the first to fourth embodiments,
the conductive material may include a linear shaped conductive material, a point shaped conductive material, or two or more of them.

According to a sixth embodiment, in the fifth embodiment,
the linear shaped conductive material may include carbon nanotubes, carbon nanofibers, graphene, or two or more of them.

According to a seventh embodiment, in the fifth or sixth embodiment,
the point shaped conductive material may include carbon black, Denka black, acetylene black, Ketjen black, channel black, furnace black, lamp black, thermal black, or two or more of them.

According to an eighth embodiment, in any one of the first to seventh embodiments,
the first binder may include a diene-based polymer, an acrylate-based polymer, a styrene-based polymer, a polyacrylonitrile-based polymer, a vinyl-based polymer, a polyoxide-based polymer, a polyacrylamide or two or more of them.

According to a ninth embodiment, in any one of the first to eighth embodiments,
the second binder may include a diene-based polymer, an acrylate-based polymer, a styrene-based polymer, or two or more of them.

According to a tenth embodiment, in any one of the first to ninth embodiments,
an amount of the negative electrode active material may be from 80 parts by weight to 99 parts by weight, an amount of the conductive material may be from 0.001 parts by weight to 0.5 parts by weight, and an amount of the first binder may be from 0.1 parts by weight to 2 parts by weight, based on 100 parts by weight of the granulated particles.

According to an eleventh embodiment, in any one of the first to tenth embodiments,
an average particle size (D50) of the granulated particles may be from 10 *µ*m to 20 *µ*m.

According to a twelfth embodiment, in any one of the first to eleventh embodiments,
the negative electrode active material may include the mixture of the silicon-based active material and the carbon-based active material, and an amount of the silicon-based active material is from 5 parts by weight to 25 parts by weight based on 100 parts by weight of the carbon-based active material.

According to a thirteenth embodiment, in any one of the first to twelfth embodiments,
the negative electrode active material layer may further include an additional carbon-based active material, an additional conductive material or both.

According to a fourteenth embodiment, in any one of the first to thirteenth embodiments,
the negative electrode active material layer may include 100 parts by weight of the granulated particles, 80 parts by weight to 99 parts by weight of the additional carbon-based active material, 0.01 parts by weight to 2 parts by weight of the additional conductive material, and 1 part by weight to 4 parts by weight of the second binder.

According to a fifteenth embodiment,
there is provided a method for manufacturing the negative electrode of any one of the first to fourteenth embodiments, including the steps of: drying a composition including the negative electrode active material, the conductive material, the first binder and a first water-based dispersion medium by a spray drying method to manufacture the granulated particles;
mixing the granulated particles with the second binder and a second water-based dispersion medium to prepare a negative electrode slurry; and
coating the negative electrode slurry on the at least one surface of the current collector, drying and rolling to form the negative electrode active material layer.

According to a sixteenth embodiment, in the fifteenth embodiment,
the negative electrode active material may include a silicon-based active material alone, or a mixture of the silicon-based active material with a carbon-based active material.

According to a seventeenth embodiment, in the fifteenth or sixteenth embodiment,
the negative electrode slurry may further include an additional carbon-based active material, an additional conductive material, or both.

According to an eighteenth embodiment, in any one of the fifteenth to seventeenth embodiments,
the spray drying method may include spraying and drying the slurry in hot air, and a temperature of the fed hot air may range from 130°C to 210°C.

According to a nineteenth embodiment,
there is provided an electrochemical device including the negative electrode of any one of the first to fourteenth embodiments.

According to a twentieth embodiment, in the nineteenth embodiment,
the electrochemical device may be a secondary battery.

### Advantageous Effects

According to an embodiment of the present disclosure, there may be provided the negative electrode having uniform dispersion of the binder and the conductive material in the negative electrode active material layer by using the granulated particles including the negative electrode active material, the conductive material and the binder. In particular, when the silicon-based active material alone or in combination with the carbon-based active material is used as the negative electrode active material, the silicon-based active material is uniformly dispersed in the negative electrode active material layer without forming agglomerates in some regions, and in particular, when the silicon-based active material is used in combination with the carbon-based active material, the carbon-based active material and the silicon-based active material may be uniformly dispersed, thereby minimizing the volume expansion induced by the silicon-based active material and ensuring high capacity of the silicon-based active material. As a result, it may be possible to significantly improve the cell performance of electrochemical devices such as secondary batteries using the negative electrode. Additionally, because the granulated particles are particles formed by granulation of fine particles, they may have more rough surface than graphite particles, so the granulated particles having high sphericity in particle shape may prevent sunken electrode surface or non-uniform loading in the electrode coating, and the uniform dispersion effect of the binder may have a beneficial effect on electrode quality and electrode coating process efficiency.

### BRIEF DESCRIPTION OF THE DRAWINGS

The accompanying drawings illustrate an exemplary embodiment of the present disclosure and together with the foregoing description, serve to provide a better understanding of the technical aspect of the present disclosure, and thus, the present disclosure is not construed as being limited to the drawings.
FIG. 1 is a diagram schematically showing a surface portion and a central portion of a granulated particle included in an electrode according to an embodiment of the present disclosure.
FIG. 2 is a schematic diagram of a negative electrode active material layer formed by the conventional method.
FIG. 3 is a schematic diagram of a negative electrode active material layer according to an embodiment of the present disclosure.

### BEST MODE

Hereinafter, the present disclosure will be described in more detail to help an understanding of the present disclosure.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

The terms used herein are used to describe exemplary embodiments, but not intended to be limiting of the present disclosure. As used herein, the singular forms include the plural forms as well, unless the context clearly indicates otherwise.

It should be further understood that 'comprise' or 'include' when used in the specification, specifies the presence of stated elements and does not preclude the presence or addition of one or more other elements unless expressly stated otherwise.

Additionally, the terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In the specification, 'A and/or B' as used herein refers to either A or B or both.

The "glass transition temperature Tg" as used herein is measured by the method commonly used in the corresponding field, and for example, may be measured by differential scanning calorimetry (DSC).

The "porosity" as used herein refers to the ratio of pore volume in a structure to its total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by a Brunauer-Emmett-Teller (BET) measurement method using nitrogen gas, Hg porosimeter and ASTM D-2873. Alternatively, the net density of the separator may be calculated from the density (apparent density) of the separator, the composition ratio of the materials included in the separator and the density of each component, and the porosity of the separator may be calculated from a difference of apparent density and net density.

The "average particle size D50" as used herein refers to a particle size at 50% of cumulative particle size distribution of particles, and the particle size may be measured using a laser diffraction method. Specifically, the particle size distribution is calculated by dispersing target powder in a dispersion medium, feeding it into a commercially available laser diffraction particle size measurement device (for example, Microtrac S3500) and measuring a diffraction pattern difference according to the particle size when particles pass through a laser beam. The particle size D50 may be measured by calculating the particle diameter at 50% of the cumulative particle size distribution of particles in the measurement device.

The "thickness" of each layer included in the electrode as used herein may indicate a value measured by the commonly used thickness measurement method. The thickness measurement method is not limited thereto, but the thickness may be, for example, a value measured using a thickness measurement device (Mitutoyo, VL-50S-B).

The "specific surface area" as used herein may indicate a value measured by the known method for measuring the specific surface area. The method for measuring the specific surface area is not limited thereto, but the specific surface area may be, for example, a value measured by a flowable or fixed method.

According to an aspect of the present disclosure,
there may be provided a negative electrode including a current collector; and
a negative electrode active material layer located on at least one surface of the current collector, and including granulated particles and a second binder, wherein the second binder holds and connects the granulated particles together,
wherein the granulated particles include a negative electrode active material, a conductive material and a first binder, and the first binder connects and holds the negative electrode active material and the conductive material together.

### <Granulated particle>

Hereinafter, the granulated particle will be described in detail.

In the present disclosure, the granulated particle may have a form of a composite particle including the negative electrode active material, the conductive material and the first binder, and if necessary, further including any other component added.

In an embodiment of the present disclosure, the granulated particle may be a secondary particle formed by granulation of two or more negative electrode active material particles held together by the first binder. The granulated particle included in the negative electrode according to an embodiment of the present disclosure may be referred to as a powder, a granule, or the like.

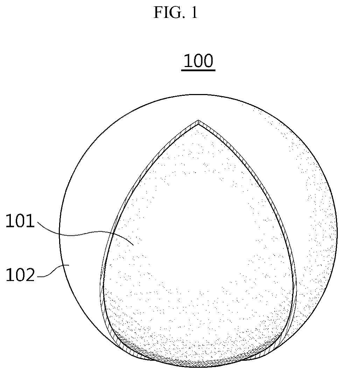

FIG. 1 shows a surface portion and a central portion of the granulated particle included in the negative electrode of an embodiment of the present disclosure. Referring to FIG. 1, in an embodiment of the present disclosure, the granulated particle may have a larger amount of the first binder included in the surface portion 102 of the granulated particle than the amount of the first binder included in the central portion 101 of the granulated particle. The amount of the binder may refer to weight or volume.

Together with this or independently of this, the granulated particle may have a larger amount (wt%)(Bₛ/Gₜ) of the first binder included in the surface portion 102 of the granulated particle than the amount (wt%)(B_{c}/Gₜ) of the first binder included in the central portion 101 of the granulated particle based on the total weight 100 wt% of the granulated particle. Here, B_{c} denotes the weight of the binder included in the central portion, Bₛ denotes the weight of the binder included in the surface portion, and Gt denotes the total weight of the granulated particle.

Together with this or independently of this, the granulated particle may have a larger amount (vol%)(Bₛ/Gₜ) of the first binder included in the surface portion 102 of the granulated particle than the amount (vol%)(B_{c}/Gₜ) of the first binder included in the central portion 101 of the granulated particle based on the total volume 100 vol% of the granulated particle. Here, B_{c} denotes the volume of the binder included in the central portion, Bₛ denotes the volume of the binder included in the surface portion, and Gt denotes the total volume of the granulated particle.

Here, the surface portion may refer to an area near the granulated particle surface to a predetermined depth in a direction from the granulated particle surface toward the granulated particle center. The central portion refers to an area other than the surface portion. In an embodiment of the present disclosure, the surface portion may refer to a surface area up to 30% of the radius, specifically inward from the surface of the granulated particle, specifically toward the center of the granulated particle. In an embodiment of the present disclosure, the surface portion may refer to a surface area from the surface of the granulated particle up to 30%, 20%, 15%, 10% or 5% of the radius. Preferably, the surface portion may refer to a surface area from the surface of the granulated particle up to 20% of the radius.

Meanwhile, in an embodiment of the present disclosure, the surface portion may refer to an area up to the granulated particle surface after reaching 70% or more of the radius from the center of the granulated particle in the outward direction of the granulated particle. In an embodiment of the present disclosure, the surface portion may refer to, for example, an area up to the granulated particle surface after reaching 80% or more, 85% or more, 90% or more, or 95% or more of the radius.

In an embodiment of the present disclosure, the center of the granulated particle may refer to a 1/2 point of the longest diameter of the granulated particle. In the present disclosure, the radius may refer to a distance from the center of the granulated particle to each point of the granulated particle surface. In an embodiment of the present disclosure, the surface portion and the central portion may be divided on the basis of a point at the same distance from each surface of the granulated particle along each radius, specifically a point at 30%, 20%, 10%, 5% or 1% of the radius from the surface.

In an embodiment of the present disclosure, in the area up to the granulated particle surface after reaching 90% or more of the radius from the granulated particle center, the amount of the first binder may be 50 wt% or more, 60 wt% or more, 70 wt% or more, 80 wt% or more, or 90 wt% or more based on the total weight 100 wt% of the granulated particle in the corresponding area.

In another embodiment of the present disclosure, in the area up to the granulated particle surface after reaching 95% or more of the particle radius from the granulated particle center, the amount of the first binder may be 50 wt% or more, 60 wt% or more, 70 wt% or more, 80 wt% or more or 90 wt% or more based on the total weight 100 wt% of the granulated particle in the corresponding area.

In another embodiment of the present disclosure, in the area up to the granulated particle surface after reaching 99% or more of the radius from the granulated particle center, the amount of the first binder may be 50 wt% or more, 60 wt% or more, 70 wt% or more, 80 wt% or more, or 90 wt% or more based on the total weight 100 wt% of the granulated particle in the corresponding area.

In an embodiment of the present disclosure, in the area up to the granulated particle surface after reaching 90% or more of the radius from the granulated particle center, the amount of the first binder may be 50 vol% or more, 60 vol% or more, 70 vol% or more, 80 vol% or more, or 90 vol% or more based on the total volume 100 vol% of the granulated particle in the corresponding area.

In another embodiment of the present disclosure, in the area up to the granulated particle surface after reaching 95% or more of the particle radius from the granulated particle center, the amount of the first binder may be 50 vol% or more, 60 vol% or more, 70 vol% or more, 80 vol% or more, or 90 vol% or more based on the total volume 100 vol% of the granulated particle in corresponding area.

In another embodiment of the present disclosure, in the area up to the granulated particle surface after reaching 99% or more of the radius from the granulated particle center, the amount of the first binder may be 50 vol% or more, 60 vol% or more, 70 vol% or more, 80 vol% or more, or 90 vol% or more based on the total volume 100 vol% of the granulated particle in corresponding area.

In an embodiment of the present disclosure, in the granulated particle surface area up to 10% of the radius from the granulated particle surface, the amount of the first binder may be 50 wt% or more, 60 wt% or more, 70 wt% or more, 80 wt% or more, or 90 wt% or more based on the total weight 100 wt% of the granulated particle in corresponding area.

In another embodiment of the present disclosure, in the granulated particle surface area up to 5% of the radius from the granulated particle surface, the amount of the first binder may be 50 wt% or more, 60 wt% or more, 70 wt% or more, 80 wt% or more or 90 wt% or more based on the total weight 100 wt% of the granulated particle in corresponding area.

In another embodiment of the present disclosure, in the granulated particle surface area up to 1% of the radius from the granulated particle surface, the amount of the first binder may be 50 wt% or more, 60 wt% or more, 70 wt% or more, 80 wt% or more, or 90 wt% or more based on the total weight 100 wt% of the granulated particle in corresponding area.

In an embodiment of the present disclosure, in the granulated particle surface area up to 10% of the radius from the granulated particle surface, the amount of the first binder may be 50 vol% or more, 60 vol% or more, 70 vol % or more, 80 vol % or more, or 90 vol % or more based on the total volume 100 vol% of the granulated particle in corresponding area.

In another embodiment of the present disclosure, in the granulated particle surface area up to 5% of the radius from the granulated particle surface, the amount of the first binder may be 50 vol% or more, 60 vol% or more, 70 vol% or more, 80 wt% or more or 90 vol% or more based on the total volume 100 vol % of the granulated particle in corresponding area.

In another embodiment of the present disclosure, in the granulated particle surface area up to 1% of the radius from the granulated particle surface, the amount of the first binder may be 50 vol% or more, 60 vol% or more, 70 vol% or more, 80 vol% or more, or 90 vol% or more based on the total volume 100 vol% of the granulated particle in corresponding area.

According to an embodiment of the present disclosure, it is confirmed that the granulated particle has the surface portion area having high binder content from the surface to the predetermined depth in the direction toward the particle center, and the binder distribution in the other area than the surface portion, i.e., the central portion (a core portion) surrounded by the surface portion may be lower than the surface portion.

Describing the granulated particle in more detail, the granulated particle may have the central portion including the plurality of negative electrode active materials; and the surface portion located at all or part of the outer side of the central portion and including the first binder to bind the negative electrode active materials. That is, in the central portion of the granulated particle, the plurality of negative electrode active materials may form an agglomerate by surface contact, line contact, point contact or two or more of these contacts, and in the surface portion of the granulated particle, the first binder may be located at all or part of the outer side of the agglomerate, and hold and bind the plurality of negative electrode active materials of the central portion of the granulated particle together.

According to an embodiment of the present disclosure, the central portion may further include a small amount of first binder to connect and hold the plurality of negative electrode active materials of the central portion together. However, as described above, the ratio of the amount of the first binder in the surface portion is preferably higher than that of the central portion.

Meanwhile, in an embodiment of the present disclosure, the granulated particle may have an aspect ratio of from 0.5 to 1.0, and preferably from 0.75 to 1.0. The aspect ratio may refer to a ratio of the long axis length to the short axis length of the granulated particle. In another embodiment of the present disclosure, an average aspect ratio of granulated particles may have a value of from 0.5 to 1.0, preferably from 0.75 to 1.0, and in this case, the average aspect ratio may refer to a ratio of the average long axis length to the average short axis length of the granulated particles. In this instance, the average short axis length may refer to the average value of length in the axial direction having the shortest length of the granulated particle, and the average long axis length may refer to the average value of length in the axial direction having the longest length of the granulated particle. When the aspect ratio of the granulated particle lies in the aforementioned range, this may have a beneficial effect on sufficient flowability suitable for the process.

The negative electrode active material may include a silicon-based active material alone, or a mixture of a silicon-based active material and a carbon-based active material.

The silicon-based active material may include silicon (Si), silicon oxide (SiOx (0<x≤2)), silicon carbide (SiC), or two or more of them.

The carbon-based active material may include natural graphite, artificial graphite, graphene, or two or more of them. In this instance, the natural graphite and the artificial graphite may be spherical, platy, needle-like.

The conductive material may include a linear shaped conductive material, a point shaped conductive material or two or more of them. That is, the conductive material may include either at least one linear shaped conductive material or at least one point shaped conductive material, or both.

In the point shaped conductive material, the "point shape" may refer to a spherical particle shape having the average diameter D50 ranging from 10 nm to 500 nm, specifically from 15 nm to 100 nm.

Additionally, the point shaped conductive material may include any conductive material of the spherical particle shape having the above-described average diameter. Specific examples of the point shaped conductive material may each independently include carbon black, Denka black, acetylene black, Ketjen black, channel black, furnace black, lamp black, thermal black or two or more of them.

In the linear shaped conductive material, the "linear shape" refers to a needle-like particle shape having an aspect ratio (a length-to-diameter ratio) ranging, for example, from 10 to 1,000, specifically from 20 to 500. For example, according to an embodiment of the present disclosure, the linear shaped conductive material may have the average diameter of from 10 nm to 500 nm, specifically from 20 nm to 300 nm. Additionally, the linear shaped conductive material used in an embodiment of the present disclosure may have the average length of from 3 *µ*m to 50 *µ*m, specifically from 5 *µ*m to 30 *µ*m, more specifically from 5 *µ*m to 20 *µ*m, more specifically from 10 *µ*m to 20 *µ*m, more specifically from 13 *µ*m to 17 *µ*m.

Here, the average diameter is the arithmetic mean of diameter of the vertical plane in the length direction of the linear shaped conductive material, and for example, may be calculated from a scanning electron microscopic (SEM) image taken at 2,000 to 50,000x magnification by a field emission scanning electron microscope. Additionally, the average length is the arithmetic mean of length of the linear shaped conductive material, and may be calculated by the same method as the average diameter.

The linear shaped conductive material may include carbon nanotubes, carbon nanofibers, graphene, or two or more of them. The carbon nanotubes may include, for example, single-walled carbon nanotubes, double-walled carbon nanotubes and multi-walled carbon nanotubes.

The single-walled carbon nanotube refers to a carbon nanotube composed of six carbon atoms connected in a hexagonal shape to form a tube, in which the number of walls (graphite faces) is only one. The single-walled carbon nanotubes have the outstanding electrical properties due to the one-dimensional structure and exhibit diverse electrical properties according to the hexagonal honeycomb shaped molecular asymmetry (chirality) structure and diameter.

The double-walled carbon nanotubes refer to carbon nanotubes in which the number of walls is two, and the multi-walled carbon nanotubes refer to carbon nanotubes in which the number of walls is multiple.

The average diameter of the single-walled carbon nanotubes may be from 0.5 nm to 15 nm. According to an embodiment of the present disclosure, the average diameter of the single-walled carbon nanotubes may be from 1 nm to 10 nm, or from 1 nm to 5 nm, or from 1 nm to 2 nm. When the average diameter of the single-walled carbon nanotubes lies in the aforementioned range, electrical conductivity of the negative electrode may be maintained with even a small amount of single-walled carbon nanotubes. The BET specific surface area of the single-walled carbon nanotubes may be from 500 m²/g to 1,500 m²/g, or from 900 m²/g to 1,200 m²/g. When the BET specific surface area lies in the aforementioned range, a conductive material dispersion having preferred solid content may be produced. The BET specific surface area may be measured through a nitrogen absorption BET method. The aspect ratio of the single-walled carbon nanotubes may be from 50 to 20,000, or the length of the single-walled carbon nanotubes may be from 5 *µ*m to 100 *µ*m, or from 5 *µ*m to 50 *µ*m. The aspect ratio may be calculated by averaging the aspect ratios of 15 single-walled carbon nanotubes having high aspect ratios and 15 single-walled carbon nanotubes having low aspect ratios when observing the single-walled carbon nanotubes powder through SEM.

The single-walled carbon nanotubes are longer in length and larger in volume due to higher aspect ratio than multi-walled carbon nanotubes or double-walled carbon nanotubes, so it may be more advantageous because electrical networks may be formed by use of single-walled carbon nanotubes even in a small amount.

The linear shaped conductive material may surround the silicon-based active material to maintain the structure of the negative electrode active material layer including the silicon-based active material during charging and discharging and continuously maintain the contact despite a large volume change of the silicon-based active material, thereby stably supplying electrons during long-term cycling, and contributing to the long life, and may increase the movement distance of electrons so that the negative electrode active material located in the upper and lower parts of the negative electrode active material layer can participate in charging and discharging reaction, thereby improving high- rate charging and discharging performance.

Additionally, the additional conductive material that is optionally further included in the granulated particle together with the conductive material as described below may contact the negative electrode active material over a large area, thereby improving high-rate characteristics.

According to an embodiment of the present disclosure, when the granulated particle including the conductive material including the linear shaped conductive material and the point shaped conductive material together is used, the linear shaped conductive material and the point shaped conductive material may be uniformly distributed in the negative electrode active material layer, and the above-described beneficial effects of the linear shaped conductive material and the point shaped conductive material may be exerted at the same time, and in particular, electrical networks may be sufficiently formed in the negative electrode active material layer by the use in smaller amounts than the conventional negative electrode using the linear shaped conductive material, thereby achieving high conductivity and expansion suppression performance of the silicon-based active material.

In an embodiment of the present disclosure, the amount of the conductive material may be from 0.001 parts by weight to 0.5 parts by weight, or 0.05 parts by weight to 0.1 parts by weight based on 100 parts by weight of the negative electrode active material.

According to an embodiment of the present disclosure, the first binder may include a diene-based polymer, an acrylate-based polymer, a styrene-based polymer, a polyacrylonitrile-based polymer, a vinyl-based polymer, a polyoxide-based polymer, a polyacrylamide, or two or more of them.

Examples of the diene-based polymer may include polymer including a monomer unit derived from conjugated diene such as butadiene or isoprene, and its hydrogenated product. A ratio of the monomer unit derived from conjugated diene in the diene-based polymer may be usually 40 wt% or more, preferably 50 wt% or more, and more preferably 60 wt% or more. Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as an acrylonitrile-butadiene copolymer (NBR); hydrogenate SBR, hydrogenated NBR.

Examples of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a cross-linked acrylate-based polymer such as a2-ethylhexyl acrylate-methacrylic acid-acrylonitrile-ethyleneglycoldimethacrylate copolymer, a2-ethylhexyl acrylate-methacrylic acid-methacrylonitrile-diethyleneglycoldimethacrylate copolymer, a2-ethylhexyl acrylatestyrene-methacrylic acid-ethyleneglycoldimethacrylate copolymer, a butyl acrylate-acrylonitrile-diethyleneglycoldimethacrylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, a copolymer of ethylene and (meth)acrylic acid such as an ethylene-acrylic acid copolymer, an ethylene-methacrylic acid copolymer may be used as a dispersion binder.

The styrene-based polymer may include polymer having a styrene monomer derived repeat unit, for example, a styrene homopolymer (polystyrene), a styrene copolymer. Examples of the styrene copolymer may include a block copolymer such as a styrene-butadiene copolymer (SBR), a styrene-ethylene-butadiene copolymer, a styrene-butadiene-propylene copolymer, a styrene-butadiene-acrylate copolymer (SBR-acrylate) (for example, a styrene-n-butyl acrylate- -methyl methacrylate-acrylonitrile copolymer, a styrene-n-butyl acrylate-itaconic acid-methyl methacrylate-acrylonitrile copolymer, etc.), a styrene-isoprene copolymer, a styrene-butadiene block copolymer, a styrene-butadiene-styrene·block copolymer, a styrene-ethylene-butylene-styrene·block copolymer, a styrene-isoprene·block copolymer, a styrene-ethylene-propylene-styrene·block copolymer.

The polyacrylonitrile-based polymer may include polyacrylonitrile, acrylamide-acrylonitrile-acrylic acid terpolymer.

The vinyl-based polymer may include polyvinylalcohol, polyvinylpropylene, polyvinylacetate.

The polyoxide-based polymer may include polyethyleneoxide, polypropylene oxide.

In an embodiment of the present disclosure, the amount of the first binder may be from 0.5 parts by weight to 20 parts by weight, or from 2 parts by weight to 10 parts by weight based on 100 parts by weight of the negative electrode active material.

In an embodiment of the present disclosure, in 100 parts by weight of the granulated particle, the amount of the negative electrode active material may be from 80 parts by weight to 99 parts by weight, or from 82 parts by weight to 98 parts by weight, the amount of the conductive material may be from 0.001 parts by weight to 0.5 parts by weight, or from 0.05 parts by weight to 0.1 parts by weight, and the amount of the first binder may be from 0.5 parts by weight to 20 parts by weight, or from 2 parts by weight to 10 parts by weight.

When the amounts of the negative electrode active material, the conductive material and the first binder in the granulated particle lie in the aforementioned range, this may have a more beneficial effect on granulated particle shape and uniformity of particle size distribution.

Additionally, the average particle size D50 of the granulated particles may be from 10 *µ*m to 20 *µ*m, or from 13 *µ*m to 18 *µ*m. When the negative electrode active material includes the silicon-based active material, the average particle size D50 of the silicon-based active material may be from 0.5 *µ*m to 5 *µ*m, or from 1 *µ*m to 3 *µ*m. When the negative electrode active material further includes the carbon-based active material, the average particle size D50 of the carbon-based active material may be from 8 *µ*m to 18 *µ*m, or from 10 *µ*m to 16 *µ*m.

When the average particle size of the granulated particles and the negative electrode active material lie in the aforementioned range, this may have a more beneficial effect on granulated particle shape and uniformity of particle size distribution.

In an embodiment of the present disclosure, the negative electrode active material may be a mixture of the silicon-based active material and the carbon-based active material, and based on 100 parts by weight of the carbon-based active material, the amount of the silicon-based active material may be from 5 parts by weight to 25 parts by weight, or from 10 parts by weight to 20 parts by weight. When the ratio of the amounts of the silicon-based active material and the carbon-based active material lies in the aforementioned range, this may have a more beneficial effect on particle dispersion in the granulated particle.

### <Negative electrode active material layer>

The negative electrode of the present disclosure includes the current collector and the negative electrode active material layer located on at least one surface of the current collector, and the negative electrode active material layer includes granulated particles including the negative electrode active material, the conductive material, and the first binder; and the second binder.

In an embodiment of the present disclosure, the negative electrode active material layer may have porosity of from 20 vol% to 40 vol%, and when the porosity lies in the aforementioned range, electrolyte wettability, shape stability and ionic conductivity may be further improved.

Meanwhile, according to an embodiment of the present disclosure, the thickness of the negative electrode active material layer may be, for example, from 30 *µ*m to 300 *µ*m, but is not limited thereto.

According to another embodiment of the present disclosure, the negative electrode active material layer may be a single layer including one unit active material layer.

According to an embodiment of the present disclosure, the negative electrode active material layer may have a multilayer structure including two or more unit active material layers stacked. In this instance, the electrode material included in each unit active material layer, for example, the negative electrode active material and the binder may be identical or different for each layer, and is not limited thereto.

In an embodiment of the present disclosure, the second binder may include a diene-based polymer, an acrylate-based polymer, a styrene-based polymer, or two or more of them.

Examples of the diene-based polymer may include polymer including a monomer unit derived from conjugated diene such as butadiene or isoprene, and its hydrogenated product. A ratio of the monomer unit derived from conjugated diene in the diene-based polymer may be usually 40 wt% or more, preferably 50 wt% or more, and more preferably 60 wt% or more. Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as an acrylonitrile-butadiene copolymer (NBR); hydrogenate SBR, hydrogenated NBR.

Examples of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a cross-linked acrylate-based polymer such as a2-ethylhexyl acrylate-methacrylic acid-acrylonitrile-ethyleneglycoldimethacrylate copolymer, a2-ethylhexyl acrylate-methacrylic acid-methacrylonitrile-diethyleneglycoldimethacrylate copolymer, a 2-ethylhexyl acrylatestyrene-methacrylic acid-ethyleneglycoldimethacrylate copolymer, a butyl acrylate-acrylonitrile-diethyleneglycoldimethacrylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, a copolymer of ethylene and (meth)acrylic acid such as an ethylene-acrylic acid copolymer, an ethylene-methacrylic acid copolymer may be used as a dispersion binder.

The styrene-based polymer may include polymer having a styrene monomer derived repeat unit, for example, a styrene homopolymer (polystyrene), a styrene copolymer. Examples of the styrene copolymer may include a block copolymer such as a styrene-ethylene-butadiene copolymer, a styrene-butadiene-propylene copolymer, a styrene-isoprene copolymer, a styrene-n-butyl acrylate-itaconic acid-methyl methacrylate-acrylonitrile copolymer, a styrene-n-buty acrylate-itaconic acid-methyl methacrylate-acrylonitrile copolymer, a styrene-butadiene block copolymer, a styrene-butadienestyrene·block copolymer, a styrene-ethylene-butylene-styrene·block copolymer, a styrene-isoprene·block copolymer, a styrene-ethylene-propylene-styrene·block copolymer.

Among them, the diene-based polymer and the cross-linked acrylate-based polymer is preferred, and the cross-linked acrylate-based polymer is especially preferred, since it is possible to obtain granules having good binding to the current collector or good surface flatness and manufacture electrodes for electrochemical devices having high electrostatic capacity and low internal resistance.

The amount of the second binder may be from 0.5 parts by weight to 4 parts by weight, or 1 part by weight to 2 parts by weight based on 100 parts by weight of the granulated particles in the negative electrode active material layer.

In an embodiment of the present disclosure, the negative electrode active material layer may further include an additional carbon-based active material, an additional conductive material, or both. That is, in addition to the granulated particles and the second binder, the negative electrode active material layer may further include either the additional carbon-based active material, or the additional conductive material, or both.

In an embodiment of the present disclosure, the negative electrode active material layer may include 100 parts by weight of the granulated particles, 80 parts by weight to 99 parts by weight or 85 parts by weight to 95 parts by weight of the additional carbon-based active material, 0.01 parts by weight to 2 parts by weight or 0.05 parts by weight to 0.5 parts by weight of the additional conductive material, and 1 part by weight to 4 parts by weight or 1.5 parts by weight to 2.5 parts by weight of the second binder.

When the amounts of the granulated particles, the additional carbon-based active material, the additional conductive material and the second binder in the negative electrode active material layer lie in the aforementioned range, it may be possible to ensure good electrode quality, thereby improving cell performance.

Meanwhile, in some circumstances, the negative electrode active material layer may further include fillers to suppress the expansion of the negative electrode active material layer, and the fillers are not limited to a particular type and may include any fibrous material that does not cause any chemical change to the corresponding battery, and for example, may include olefin-based polymer such as polyethylene, polypropylene; fibrous materials such as glass fibers, carbon fibers.

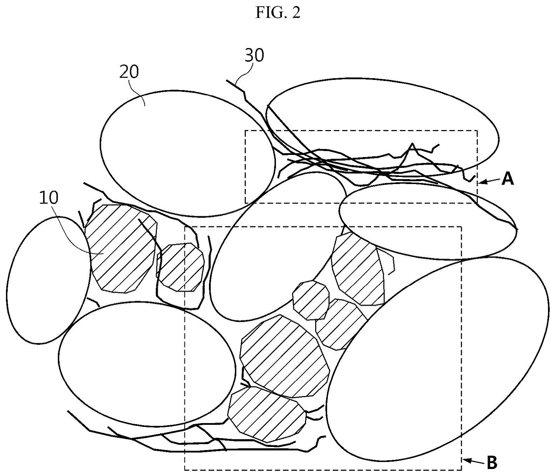

FIG. 2 is a schematic diagram of the negative electrode active material layer formed using a slurry obtained by mixing the silicon-based active material 10, the carbon-based active material 20, the conductive material (the linear shaped conductive material) 30 together by the conventional method. Referring to FIG. 2, non-uniform dispersion of the conductive material in the negative electrode active material layer and agglomeration in a specific region (section A), or agglomerates of silicon-based active materials 10 between the carbon-based active materials 20, resulting in very poor dispersion (section B) are observed.

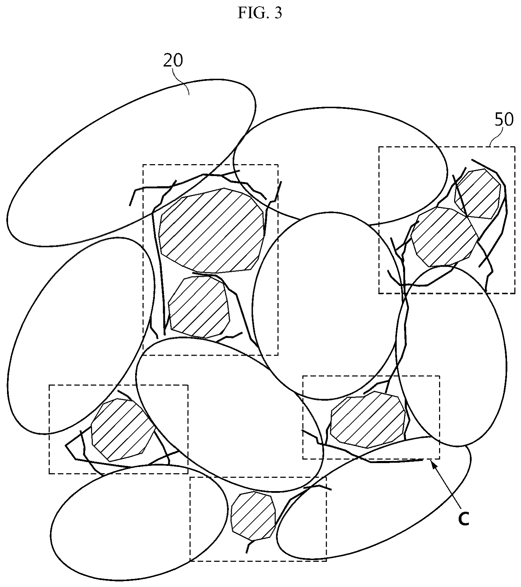

In contrast, FIG. 3 is a schematic diagram of the negative electrode active material layer according to an embodiment of the present disclosure. Referring to FIG. 3, there may be provided the negative electrode having uniform dispersion of the silicon-based active material and the conductive material in the negative electrode active material layer by separately manufacturing the granulated particles 50 including the negative electrode active material, the conductive material and the first binder, and applying the granulated particles together with the second binder (see section C). Specifically, it can be seen that when in the manufacture of the granulated particles, the silicon-based active material is included as the negative electrode active material, the linear shaped conductive material is used as the conductive material, and the carbon-based active material 20 is used as the additional negative electrode active material together with the granulated particles 50, as opposed to the conventional negative electrode of FIG. 2, the silicon-based active material in the granulated particles between the carbon-based active materials 20 does not agglomerate, and dispersion is significantly improved.

The current collector is not limited to a particular type and may include any material that has high conductivity and does not cause any chemical change to the battery, for example, stainless steel, aluminum, nickel, titanium, sintered carbon, copper or aluminum or stainless steel treated with carbon, nickel, titanium or silver on the surface. Additionally, the current collector may have microtexture on the surface to increase the adhesion strength of the negative electrode active material, and may come in various type, for example, a film, a sheet, a foil, a net, a porous body, a foam, a nonwoven fabric or the like.

In an embodiment of the present disclosure, the current collector may have a primer layer on all or part of the current collector.

The primer layer may include a binder for the primer layer and a conductive material for the primer layer, and the sum of amounts of the binder and the conductive material in the primer layer may be 90 wt% or more.

The electrode according to an embodiment of the present disclosure includes the negative electrode active material layer including the granulated particles, and in this instance, when the primer layer includes the binder and the conductive material such that the sum of amounts of the binder and the conductive material is 90 wt% or more, it may be possible to ensure time-dependent stability of the primer layer, thereby achieving good properties such as adhesion strength and life characteristics, but the present disclosure is not limited thereto.

According to an embodiment of the present disclosure, the primer layer includes the binder for the primer layer and the conductive material for the primer layer, and may further include a dispersant.

According to an embodiment of the present disclosure, the primer layer includes the binder for the primer layer and the conductive material for the primer layer, but may not substantially include the dispersant.

According to an embodiment of the present disclosure, the binder for the primer layer may include, without limitation, any type of binder commonly used in the primer layer.

According to another embodiment of the present disclosure, the binder for the primer layer may preferably include polymer that ensures the time-dependent stability of the primer layer. Specifically, the binder for the primer layer may have the glass transition temperature Tg of 45°C or less.

According to another embodiment of the present disclosure, the binder for the primer layer may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the binder may include styrene butadiene rubber (SBR), nitrile butadiene rubber (NBR), polymethylmethacrylate, polyethylhexylacrylate, polybutylacrylate or two or more of them.

According to another embodiment of the present disclosure, the binder for the primer layer may include one selected from the above-described types having the above-described glass transition temperature value or a mixture of two or more of them.

According to another embodiment of the present disclosure, the binder for the primer layer may include styrene butadiene rubber (SBR) having the glass transition temperature Tg of from -40°C to 45°C, nitrile butadiene rubber (NBR) having the glass transition temperature Tg of from -40°C to 45°C or a mixture thereof.

According to an embodiment of the present disclosure, the conductive material for the primer layer have the specific surface area of from 30 m²/g to 1,400 m²/g, and a spherical shape. In this instance, the primary particle size of the conductive material having the spherical shape may be, for example, from 10 nm to 100 nm, specifically from 15 nm to 70 nm, but is not limited thereto.

According to another embodiment of the present disclosure, the conductive material for the primer layer may have a tubular (tube type) shape having the specific surface area of from 10 m²/g to 400 m²/g. In this instance, in the conductive material having the tubular shape, the diameter of a cross section in a direction perpendicular to the length direction may be from 0.1 nm to 3 nm, and specifically from 0.3 nm to 1.5 nm, but is not limited thereto.

The conductive material for the primer layer is not limited to a particular type and may include any conductive material that does not cause any chemical change to the corresponding battery, and for example, may include graphite such as natural graphite or artificial graphite; carbon black-based carbon compounds such as carbon black, acetylene black, Ketjen black, channel black, furnace black, lamp black, thermal black; conductive fibers such as carbon fibers or metal fibers; fluorocarbon; metal granulated particles such as aluminum, nickel granulated particles; conductive whiskers such as zinc oxide, potassium titanate; conductive metal oxide such as titanium oxide; conductive materials such as polyphenylene derivatives, but specifically, to uniformly mix the conductive material and improve conductivity, the conductive material may include activated carbon, graphite, carbon black, carbon nanotubes or a mixture thereof, and more specifically, activated carbon.

According to an embodiment of the present disclosure, the primer layer may include the above-described composition and have the thickness of from 300 nm to 1.5 *µ*m, specifically from 700 nm to 1.3 *µ*m, but is not limited thereto.

### <Method for manufacturing negative electrode>

According to an aspect of the present disclosure, there is provided a method for manufacturing the negative electrode according to an embodiment of the present disclosure, including the steps of: drying a composition including the negative electrode active material, the conductive material, the first binder, and the first water-based dispersion medium by a spray drying method to manufacture granulated particles;
mixing the granulated particles with the second binder and the second water-based dispersion medium to prepare a negative electrode slurry; and
coating the negative electrode slurry on at least one surface of the current collector, drying and rolling to form the negative electrode active material layer.

First, the composition including the negative electrode active material, the conductive material, the first binder and the first water-based dispersion medium is dried by the spray drying method to manufacture the granulated particles.

The negative electrode active material, the conductive material, the first binder and optionally an additive are dispersed or dissolved in the dispersion medium (a solvent for the first binder) to obtain the composition in which the negative electrode active material, the conductive material, the first binder and/or the additive is dispersed or dissolved.

The dispersion medium used to obtain the composition is, the most suitably, water, but an organic solvent may be used. The organic solvent may include, for example, alkylalcohols such as methylalcohol, ethylalcohol, propylalcohol; alkylketones such as acetone, methylethylketone; ethers such as tetrahydrofuran, dioxane, diglyme; amides such as diethylformamide, dimethylacetoamide, N-methyl-2-pyrrolidone (hereinafter referred to as NMP), dimethylimidazolidinone; sulfur-based solvents such as dimethylsulfoxide, sulfolane, but alcohols are preferred. When the organic solvent having lower boiling point than water is used together, the speed of drying in fluidized bed granulation may be increased. Additionally, as the dispersion or dissolution of the negative electrode binder may change, the viscosity or flowability of the slurry may be adjusted according to the amount or type of the dispersion medium, thereby improving the production efficiency.

The dispersion medium used to prepare the composition may be included in such an amount that the solids concentration of the composition usually ranges from 0.1 wt% to 20 wt%, or from 0.5 wt% to 10 wt%, or from 1 wt% to 5 wt%.

The method or order of dispersing or dissolving the negative electrode active material, the conductive material and the first binder in the dispersion medium is not limited to a particular method or order, and may include, for example, a method that adds the negative electrode active material, the conductive material and the first binder to the dispersion medium and mixes them, a method that dissolves or disperses the first binder in the dispersion medium, and finally, adds the negative electrode active material and the conductive material and mixes them. The mixing means may include, for example, a ball mill, a sand mill, a bead mill, a pigment dispersion machine, a stone mill, an ultrasonic dispersion machine, a homogenizer and a planetary mixer. The mixing may be performed, for example, in the range of room temperature to 80°C for 10 minutes to a few hours.

Subsequently, the composition is spray dried. The spray drying method dries the slurry while spraying the slurry in hot air. The spraying method of equipment used in the spray drying method includes a rotary disc method and a pressure nozzle method. The rotary disc method is a method which feeds the composition into almost the center of the disc that rotates at high speed, urges the composition to the periphery of the disc by the centrifugal force of the disc, to create mist and dries it. The rotation rate of the disc relies on the size of the disc, but is usually from 5,000 rpm to 35,000 rpm, and preferably from 15,000 rpm to 30,000 rpm. Meanwhile, the pressure nozzle method is a method which sprays the composition through the thin nozzle together with air or a liquid such as a high pressure fluid to convert into mist and dries it.

In an embodiment of the present disclosure, the temperature of the hot air (the temperature of the fed hot air) may be controlled to 130°C to 210°C, 135°C to 200°C, or 130°C to 160°C, or 160°C to 210°C, or 160°C to 180°C, or 140°C to 190°C, or 140°C to 180°C, or 140°C to 160°C, or 160°C to 190°C on the basis of the reactor inlet temperature (input) to form the granulated particle structure having the high amount of the first binder on the surface. When the temperature of the fed hot air lies in the aforementioned range, the negative electrode active material, the conductive material, and the first binder may be uniformly dispersed in the granulated particles, thereby achieving uniform dispersion of each component in the granulated particles manufactured in the hot air temperature condition and uniform capacity in the manufacture of the cell. Specifically, when the temperature of the fed hot air is higher than the aforementioned range, drying may be performed fast, and in droplets sprayed during fast drying, drying of the solvent (water) may be faster than particle alignment in the droplets and only small silicon particles may move in the solvent drying direction fast, resulting in non-uniform dispersion and agglomeration of the silicon particles in the granulated particles, or in a worse case, only silicon particles may agglomerate to separately form granulated particles. The non-uniform dispersion and agglomeration of silicon particles or the electrode manufactured using the granulated particles obtained by agglomerates of silicon particles may result in non-uniform capacity. On the contrary, when the hot air temperature is overly low, the droplets may not be sufficiently dried while the droplets contact hot air, and in a state that the droplets adhere to the chamber inner walls, the droplets may get dry, and also in this case, due to non-uniform drying, the granulated particles having non-uniform distribution of the negative electrode active material, the conductive material, and the first binder in the granulated particles may be formed and the recovery rate may be low. Additionally, when the temperature of the hot air lies in the aforementioned range, the shape of the granulated particles obtained by uniformly spraying the droplets may be uniform, thereby improving the performance of the electrode.

In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, in the spray drying, the outlet temperature (the temperature of hot air released from the reactor) of the reactor may be controlled to 90°C to 130°C.

When the outlet temperature and/or a difference ΔT between inlet temperature and outlet temperature is low, drying is not properly performed, so particles containing a large amount of remaining solvent may be formed, thereby failing to form spherical particles of uniform shape, resulting in agglomeration of granulated particles or amorphous granules. Meanwhile, when the inlet temperature is overly high and ΔT is large, granulation fails due to overdrying and particles having very small particle size D50 and low aspect ratio may be produced. Accordingly, to control the particle size to the proper level together with high aspect ratio and less binder agglomeration, it is necessary to control the inlet temperature and outlet temperature within the proper range.

Additionally, heating may be optionally performed to cure the surface of the result obtained by the spray drying, i.e., the granulated particles, and in this instance, the thermal treatment temperature may be usually from 80°C to 300°C.

Subsequently, the granulated particles may be mixed with the second binder and the second water-based dispersion medium to prepare the negative electrode slurry.

In this instance, for the second water-based dispersion medium used, reference may be made to the first water-based dispersion medium described above, and for the slurry preparation process, reference may be made to the composition preparation process for manufacturing the granulated particles.

Subsequently, the negative electrode slurry is coated on at least one surface of the current collector, dried and rolled to form the negative electrode active material layer.

The slurry prepared by the above-described method is coated on the current collector. In this instance, the current collector may have the primer layer including the conductive material for the primer layer and the binder for the primer layer as described above on all or part of at least one surface.

In an embodiment of the present disclosure, the method for coating the slurry on at least one surface of the current collector may include any method commonly used in the corresponding technical field, and may include, for example, spray coating, dip coating, gravure coating, die coating.

In an embodiment of the present disclosure, the drying may be performed by any drying method commonly used to manufacture electrodes. For example, the drying may be performed at 30°C to 200°C or 40°C to 80°C. Additionally, the drying may be performed for 2 minutes to 20 minutes or 2 minutes to 10 minutes by air.

The rolling step generally uses a press process by rolls. In the roll press process, two cylindrical rolls are vertically arranged in parallel at a small interval, and the electrode is placed between the rolls and pressed by rotating the rolls in the opposite directions. The rolls may adjust the heating or cooling temperature.

As described above, the negative electrode active material may include the silicon-based active material alone, or a mixture of the silicon-based active material and the carbon-based active material. Additionally, the negative electrode slurry may further include either the additional carbon-based active material or the additional conductive material, or both.

Additionally, according to an aspect of the present disclosure, there is provided an electrochemical device including the negative electrode according to an embodiment of the present disclosure.

The electrochemical device may include any device in which electrochemical reaction takes place, and specific examples may include any type of primary battery, secondary battery, fuel cell, solar cell or capacitor such as supercapacitor. In the present disclosure, preferably the electrochemical device may be a secondary battery, and more preferably a lithium ion secondary battery.

Additionally, according to an embodiment of the present disclosure, there may be provided an energy storage system including the secondary battery as a unit battery.

The secondary battery may include an electrode assembly including the negative electrode according to an embodiment of the present disclosure, a positive electrode and a separator and a battery case (a cylindrical case, a prismatic case, a pouch, etc.) accommodating the electrode assembly together with a lithium containing nonaqueous electrolyte.

The positive electrode may have a positive electrode active material layer including a positive electrode active material, a binder, and optionally a conductive material on at least one surface of a current collector.

The positive electrode active material may include any type of lithium transition metal oxide, lithium metal iron phosphate, or metal oxide without limitation, and may include, for example, layered compounds such as lithium cobalt oxide (LiCoO₂), lithium nickel oxide (LiNiO₂) or compounds with one or more transition metal substitution; lithium manganese oxide of formula Li₁₊ₓMn₂₋ₓO₄ (x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 to 0.3); lithium manganese composite oxide represented by formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); Li₁₊ₓ(NiₐCo_{b}MnₑAl_{d})₁₋ₓO₂ (x = 0 to 0.03, a = 0.3 to 0.95, b = 0.01 to 0.35, c = 0.01 to 0.5, d = 0.001 to 0.03, a+b+c+d=1) with partial substitution of aluminum ions for Li in the formula; lithium metal phosphate LiMPO₄ (M = Fe, Co, Ni, or Mn), disulfide compounds; Fe₂(MoO₄)₃, but is not limited thereto.

In an embodiment of the present disclosure, the binder included in the positive electrode may include any commonly used binder material for electrochemical devices without limitation, but may include, for example, a diene-based polymer, an acrylate-based polymer, a fluorine-based polymer, a styrene-based polymer or two or more of them.

Examples of the diene-based polymer may include polymer including a monomer unit derived from conjugated diene such as butadiene or isoprene, and its hydrogenated product. A ratio of the monomer unit derived from conjugated diene in the diene-based polymer may be usually 40 wt% or more, preferably 50 wt% or more, and more preferably 60 wt% or more.

Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as an acrylonitrile-butadiene copolymer (NBR); hydrogenate SBR, hydrogenated NBR.

The styrene-based polymer may include polymer having a styrene monomer derived repeat unit, for example, a styrene homopolymer (polystyrene), a styrene copolymer. Examples of the styrene copolymer may include a block copolymer such as a styrene-ethylene-butadiene copolymer, a styrene-butadiene-propylene copolymer, a styrene-isoprene copolymer, a styrene-n-butyl acrylate-itaconic acid-methyl methacrylate-acrylonitrile copolymer, a styrene-n-butyl acrylate-itaconic acid-methyl methacrylate-acrylonitrile copolymer, a styrene-butadiene block copolymer, a styrene-butadienestyrene·block copolymer, a styrene-ethylene-butylene-styrene·block copolymer, a styrene-isoprene·block copolymer, a styrene-ethylene-propylene-styrene·block copolymer.

Examples of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a cross-linked acrylate-based polymer such as a 2-ethylhexyl acrylate-methacrylic acid-acrylonitrile-ethyleneglycoldimethacrylate copolymer, a 2-ethylhexyl acrylate-methacrylic acid-methacrylonitrile-diethyleneglycoldimethacrylate copolymer, a 2-ethylhexyl acrylatestyrene-methacrylic acid-ethyleneglycoldimethacrylate copolymer, a butyl acrylate-acrylonitrile-diethyleneglycoldimethacrylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, a copolymer of ethylene and (meth)acrylic acid such as an ethylene-acrylic acid copolymer, an ethylene-methacrylic acid copolymer may be used as a dispersion binder.

The fluorine-based polymer may include a polyvinylidene fluoride-based copolymer such as polyvinylidene fluoride (PVdF), polytetrafluoroethylene (PTFE) and PVDF-HFP, specifically, polytetrafluoroethylene (PTFE), and more specifically, polytetrafluoroethylene (PTFE).

The separator may include porous polymer films commonly used as separators, for example, porous polymer films made of polyolefin-based polymer such as an ethylene homopolymer, a propylene homopolymer, an ethylene/butene copolymer, an ethylene/hexene copolymer and an ethylene/methacrylate copolymer, used singly or in stack. Additionally, an insulating thin film having high ion permeation and high mechanical strength may be used. The separator may include a safety reinforced separator (SRS) having a thin ceramic coating on the separator surface. Besides, commonly used porous nonwoven fabrics, for example, nonwoven fabrics made of high melting point glass fibers, polyethyleneterephthalate fibers may be used, but is not limited thereto.

The electrolyte solution includes a lithium salt as an electrolyte and an organic solvent to dissolve the electrolyte.

The lithium salt may include any lithium salt commonly used in electrolyte solutions for secondary batteries without limitation, and for example, an anion of the lithium salt may include at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The organic solvent included in the electrolyte solution may include any commonly used organic solvent without limitation, and typically, may include at least one selected from the group consisting of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylenecarbonate, sulfolane, gamma-butyrolactone, propylenesulfite and tetrahydrofuran.

In particular, among these carbonate-based organic solvents, cyclic carbonate such as ethylenecarbonate and propylenecarbonate is a high viscosity organic solvent, and dissolves the lithium salt in the electrolyte well due to the high dielectric constant. More preferably, when a mixture of the cyclic carbonate with low viscosity, low dielectric constant linear carbonate such as dimethylcarbonate and diethylcarbonate at an optimal ratio is used, the electrolyte solution having high electrical conductivity may be prepared.

Optionally, the electrolyte solution stored according to the present disclosure may further include an additive such as an overcharge inhibitor included in commonly used electrolyte solutions.

The lithium secondary battery according to an embodiment of the present disclosure may be completed by placing the positive electrode and the negative electrode with the separator interposed between the positive electrode and the negative electrode to form an electrode assembly, placing the electrode assembly in, for example, a pouch, a cylindrical battery case or a prismatic battery case, and injecting the electrolyte. Alternatively, the lithium secondary battery may be completed by stacking the electrode assembly, filling with the electrolyte solution, placing the obtained resultant product in the battery case and sealing the battery case.

In this instance, the detailed structure of the secondary battery and the energy storage system is well known, and its description is omitted.

Hereinafter, examples will be described in detail to particularly describe the present disclosure. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

### EXAMPLE

### [Example 1]

### 1. Negative electrode

### (1) Preparation of granulated particle

Si (average particle size D50: 3 *µ*m) as a silicon-based active material, spherical natural graphite (average particle size D50: 18 um) as a carbon-based active material, polyacrylamide as a first binder and water as a dispersion medium were mixed at a weight ratio of 5:100:0.5:100 through a homogenizer to prepare a suspension.

The prepared composition was fed into a spray dryer together with hot air in the pressure range condition of -40 mmH₂O to dry it. In this instance, the condition of the spray dryer was controlled to the inlet temperature of 160°C, the outlet temperature of 90°C, and the rotation rate of 18,000 rpm.

The granulated particles had a central portion including the plurality of silicon-based active materials, the carbon-based active material and the conductive material and a surface portion located on the outer side of the central portion and including the first binder binding the plurality of silicon-based active materials, the carbon-based active material and the conductive material. The average particle size D50 of the obtained granulated particles was 15 *µ*m, and the aspect ratio was 1.1.

### (2) Preparation of current collector having primer layer

30 parts by weight of carbon black (specific surface area: 30 m²/g, particle size: 70 nm) as a conductive material for a primer layer, 69 parts by weight of styrene-butadiene rubber (SBR) (Tg: -15°C) as a binder for a primer layer and 1 part by weight of carboxymethylcellulose (CMC) as a dispersant were mixed in water as a dispersion medium to prepare a slurry for a primer layer. In this instance, a ratio of amounts of the conductive material, the binder and the dispersant in the slurry for the primer layer was equal to a ratio of amounts of the conductive material, the binder, and the dispersant in the primer layer formed later. The percent of solids in the slurry for the primer layer was 7 wt%.

The prepared slurry for the primer layer was coated on one surface of a copper current collector (thickness: 10 *µ*m), and dried at 130°C to form the primer layer on the front surface of the copper current collector.

### (3) Manufacture of negative electrode

The obtained granulated particles, natural graphite (average particle size D50: 16 *µ*m) as a carbon-based active material, single-walled carbon nanotubes as an additional conductive material, styrene butadiene rubber (SBR) and carboxymethyl cellulose (CMC) as a second binder were mixed with water as a dispersion medium at a weight ratio of 10 : 86 : 3 : 1 through a homogenizer to prepare a slurry with viscosity of about 3000 cPs level. In this instance, the solid content in the slurry was 50 wt%.

The prepared slurry was coated on both surfaces of the as-prepared current collector having the primer layer by doctor blading, dried using a hot air dryer at 110°C for 10 minutes and roll-pressed to manufacture a negative electrode having a negative electrode active material layer on both surfaces of the current collector with 10 mg/25cm² loading (weight basis) per unit area.

### (4) Manufacture of secondary battery

An electrode assembly was manufactured using the as-prepared negative electrode and lithium metal and a porous polyethylene membrane (thickness: 10 *µ*m) as a separator interposed between them. The electrode assembly was placed in a coin-type battery case, followed by injection of a liquid electrolyte solution of 1M LiPF₆ in a solvent of ethylene carbonate, dimethylenecarbonate and diethyl carbonate at a volume ratio of 1:2:1 mixed with 10 wt% of fluoroethylenecarbonate (FEC), then sealing and ageing to manufacture a coin cell secondary battery.

### [Example 2]

Granulated particles were manufactured by the same method as Example 1 except that Si (average particle size D50: 3 *µ*m) as the silicon-based active material, spherical natural graphite (average particle size D50: 18 um) as the carbon-based active material, polyacrylamide as the first binder and water as the dispersion medium were mixed at a weight ratio of 10:100:0.5:100 through a homogenizer to prepare a composition. The average particle size D50 of the obtained granulated particles was 15 *µ*m, and the aspect ratio was 1.1.

A negative electrode and a secondary battery including the same were manufactured by the same method as Example 1 except that the as-prepared granulated particles were used.

### [Example 3]

Granulated particles were manufactured by the same method as Example 1 except that Si (average particle size D50: 3 *µ*m) as the silicon-based active material, spherical natural graphite (average particle size D50: 18 um) as the carbon-based active material, polyacrylamide as the first binder and water as the dispersion medium were mixed at a weight ratio of 15:100:0.5:100 through a homogenizer to prepare a composition. The average particle size D50 of the obtained granulated particles was 15 *µ*m, and the aspect ratio was 1.1.

A negative electrode and a secondary battery including the same were manufactured by the same method as Example 1 except that the as-prepared granulated particles were used.

### [Example 4]

Granulated particles were manufactured by the same method as Example 1 except that Si (average particle size D50: 3 *µ*m) as the silicon-based active material, spherical natural graphite (average particle size D50: 18 um) as the carbon-based active material, polyacrylamide as the first binder and water as the dispersion medium were mixed at a weight ratio of 20:100:0.5:100 through a homogenizer to prepare a composition. The average particle size D50 of the obtained granulated particles was 15 *µ*m, and the aspect ratio was 1.1.

A negative electrode and a secondary battery including the same were manufactured by the same method as Example 1 except that the as-prepared granulated particles were used.

### [Comparative Example 1]

Si (average particle size D50: 3 *µ*m) as a silicon-based active material, spherical natural graphite (average particle size D50: 18 um) as a carbon-based active material, single-walled carbon nanotubes, styrene butadiene rubber (SBR) and carboxymethyl cellulose (CMC) were mixed with water as a dispersion medium at a weight ratio of 5:90.9:0.1:3:1 through a homogenizer to prepare a slurry with viscosity of about 5000 cPs level. In this instance, the solid content in the slurry was 50 wt%.

The prepared slurry was coated on both surfaces of the as-prepared current collector having the primer layer by doctor blading, dried using a hot air dryer at 110°C for 10 minutes and roll-pressed to manufacture a negative electrode having a negative electrode active material layer on both surfaces of the current collector with 10 mg/25cm² loading (weight basis) per unit area.

A negative electrode and a secondary battery including the same were manufactured by the same method as Example 1 except that the as-prepared granulated particles were used.

### [Comparative Example 2]

When manufacturing granulated particles, Si (average particle size D50: 3 *µ*m) as a silicon-based active material, spherical natural graphite (average particle size D50: 18 um) as a carbon-based active material, polyacrylamide as a first binder and water as a dispersion medium were mixed at a weight ratio of 10:100:0.5:100 through a homogenizer to prepare a composition.

The prepared composition was fed into a spray dryer together with hot air in the pressure range condition of -40 mmH₂O to dry it. In this instance, granulated particles were manufactured by the same method as Example 1 except that the condition of the spray dryer was controlled to the inlet temperature of 120°C, the outlet temperature of 60°C and the rotation rate of 18,000 rpm. The average particle size D50 of the obtained granulated particles was 35 *µ*m, and the aspect ratio was 2.1.

A negative electrode and a secondary battery including the same were manufactured by the same method as Example 1 except that the as-prepared granulated particles were used.

### [Comparative Example 3]

When manufacturing granulated particles, Si (average particle size D50: 3 *µ*m) as a silicon-based active material, spherical natural graphite (average particle size D50: 18 um) as a carbon-based active material, polyacrylamide as a first binder and water as a dispersion medium were mixed at a weight ratio of 10:100:0.5:100 through a homogenizer to prepare a composition.

The prepared composition was fed into a spray dryer together with hot air in the pressure range condition of -40 mmH₂O to dry it. In this instance, granulated particles were manufactured by the same method as Example 1 except that the condition of the spray dryer was controlled to the inlet temperature of 220°C, the outlet temperature of 120°C and the rotation rate of 18,000 rpm. The average particle size D50 of the obtained granulated particles was 7 *µ*m, and the aspect ratio was 1.4.

A negative electrode and a secondary battery including the same were manufactured by the same method as Example 1 except that the as-prepared granulated particles were used.

### [Evaluation results]

Evaluation of first discharge capacity, initial efficiency, and capacity retention

For each of the secondary batteries manufactured in Examples 1 to 4 and Comparative Examples 1 to 3, an initial charging/discharging test was performed by the following method and life characteristics were evaluated.

In the first two cycles, charging was performed in a CC/CV mode, after charging with 0.1C current to 0.005V in a CC mode, the charging ended when the current was 0.05C at the end-of-charge voltage (0.005V). Discharging was performed in a CC mode, the end-of-discharge voltage was maintained at 1.5V and the current was maintained at 0.1C. In the subsequent cycles, charging was performed in a CC/CV mode, after charging with 0.3C current to 0.01V in a CC mode, the charging ended when the current was 0.01C at the end-of-charge voltage (0.01V). Discharging was performed in a CC mode, the current was maintained at 0.5C, and the end-of-discharge voltage was maintained at 1.5V.

In the following TABLE 1, initial efficiency (%) is obtained in percentage of initial discharge capacity to initial charge capacity. Additionally, capacity retention is obtained in percentage of 50th discharge capacity to 3rd discharge capacity.

**[TABLE 1]**

| | First discharge capacity (mAh/g) | Initial efficiency (%) | Capacity retention (%, 50th discharge capacity /3rd discharge capacity)discharge capacity) |
|---|---|---|---|
| Example 1 | 507 | 90.4 | 79 |
| Example 2 | 511 | 92 | 88 |
| Example 3 | 510 | 91 | 86 |
| Example 4 | 513 | 90 | 82 |
| Comparative Example 1 | 490 | 88 | 70 |
| Comparative Example 2 | 465 | 90 | 71 |
| Comparative Example 3 | 580 | 86 | 64 |

Referring to the above TABLE 1, it was confirmed that the secondary batteries using the negative electrodes manufactured according to Examples 1 to 4 had better life characteristics than the secondary batteries of Comparative Examples 1 to 3.

## Claims

1. A negative electrode comprising:
a current collector; and
a negative electrode active material layer located on at least one surface of the current collector and including granulated particles and a second binder, wherein the second binder holds and connects the granulated particles together,
wherein the granulated particles include a negative electrode active material, a conductive material and a first binder, wherein the first binder connects and holds the negative electrode active material and the conductive material together.

2. The negative electrode according to claim 1,
wherein the negative electrode active material includes a silicon-based active material alone, or a mixture of the silicon-based active material with a carbon-based active material.

3. The negative electrode according to claim 2,
wherein the silicon-based active material includes silicon (Si), a silicon oxide (SiOx (0<x≤2), a silicon carbide (SiC), a silicon-based alloy (MₓSi_{y}, M:Ni,Ti,Fe,Zr,Nb) or two or more of them.

4. The negative electrode according to claim 2,
wherein the carbon-based active material includes natural graphite, artificial graphite, graphene, or two or more of them.

5. The negative electrode according to claim 1,
wherein the conductive material includes a linear shaped conductive material, a point shaped conductive material, or two or more of them.

6. The negative electrode according to claim 5,
wherein the linear shaped conductive material includes carbon nanotubes, carbon nanofibers, graphene, or two or more of them.

7. The negative electrode according to claim 5,
wherein the point shaped conductive material includes carbon black, Denka black, acetylene black, Ketjen black, channel black, furnace black, lamp black, thermal black, or two or more of them.

8. The negative electrode according to claim 1,
wherein the first binder includes a diene-based polymer, an acrylate-based polymer, a styrene-based polymer, a polyacrylonitrile-based polymer, a vinyl-based polymer, a polyoxide-based polymer, a polyacrylamide or two or more of them.

9. The negative electrode according to claim 1,
wherein the second binder includes a diene-based polymer, an acrylate-based polymer, a styrene-based polymer, or two or more of them.

10. The negative electrode according to claim 1,
wherein an amount of the negative electrode active material is from 80 parts by weight to 99 parts by weight, an amount of the conductive material is from 0.001 parts by weight to 0.5 parts by weight, and an amount of the first binder is from 0.1 parts by weight to 2 parts by weight, based on 100 parts by weight of the granulated particles.

11. The negative electrode according to claim 1,
wherein an average particle size (D50) of the granulated particles is from 10 *µ*m to 20 *µ*m.

12. The negative electrode according to claim 2,
wherein the negative electrode active material includes the mixture of the silicon-based active material and the carbon-based active material, and an amount of the silicon-based active material is from 5 parts by weight to 25 parts by weight based on 100 parts by weight of the carbon-based active material.

13. The negative electrode according to claim 1,
wherein the negative electrode active material layer further includes an additional carbon-based active material, an additional conductive material or both.

14. The negative electrode according to claim 13,
wherein the negative electrode active material layer includes 100 parts by weight of the granulated particles, 80 parts by weight to 99 parts by weight of the additional carbon-based active material, 0.01 parts by weight to 2 parts by weight of the additional conductive material, and 1 part by weight to 4 parts by weight of the second binder.

15. A method for manufacturing the negative electrode according to claim 1, the method comprising the steps of:
drying a composition including the negative electrode active material, the conductive material, the first binder and a first water-based dispersion medium by a spray drying method to manufacture the granulated particles;
mixing the granulated particles with the second binder and a second water-based dispersion medium to prepare a negative electrode slurry; and
coating the negative electrode slurry on the at least one surface of the current collector, drying and rolling to form the negative electrode active material layer.

16. The method for manufacturing the negative electrode according to claim 15,
wherein the negative electrode active material includes a silicon-based active material alone, or a mixture of the silicon-based active material with a carbon-based active material.

17. The method for manufacturing the negative electrode according to claim 15,
wherein the negative electrode slurry further includes an additional carbon-based active material, an additional conductive material, or both.

18. The method for manufacturing the negative electrode according to claim 15,
wherein the spray drying method includes spraying and drying the slurry in hot air, and a temperature of the fed hot air ranges from 130°C to 210°C.

19. An electrochemical device comprising the negative electrode according to any one of claims 1 to 14.

20. The electrochemical device according to claim 19,
wherein the electrochemical device is a secondary battery.
